Europäisches Patentamt

European Patent Office

Office européen des brevets

(11) Veröffentlichungsnummer: **0 048 498**
A1

(12) # EUROPÄISCHE PATENTANMELDUNG

(21) Anmeldenummer: 81107601.7

(22) Anmeldetag: 24.09.81

(51) Int. Cl.³: **B 05 D 5/06**
**B 05 D 7/16, C 09 D 5/28**

(30) Priorität: 24.09.80 DE 3035917

(43) Veröffentlichungstag der Anmeldung:
31.03.82 Patentblatt 82/13

(84) Benannte Vertragsstaaten:
BE DE FR GB IT NL SE

(71) Anmelder: Herberts Gesellschaft mit beschränkter
Haftung
Christbusch 25
D-5600 Wuppertal 2(DE)

(72) Erfinder: Graetz, Hans-Joachim, Dr. Dipl.-Chem.
Emanuel-Felke-Strasse 41
D-5600 Wuppertal 12(DE)

(72) Erfinder: von Scheid, Lutz
Gennebrecker Strasse 91
D-5600 Wuppertal 2(DE)

(74) Vertreter: Türk, Dietmar, Dr. rer. nat. et al,
Redies, Redies, Türk & Gille, Patentanwälte
Brucknerstrasse 20
D-4000 Düsseldorf 13(DE)

(54) Verfahren zum Aufbringen einer mehrschichtigen Lackierung auf ein Kraftfahrzeug.

(57) Verfahren zum Aufbringen einer mehrschichtigen Lackierung auf ein Kraftfahrzeug, wobei eine oder mehrere dieser Schichten Korrosionsschutzschichten und eine dieser Schichten eine Effektlackschicht sind, wobei auf eine Farblackschicht eine 8 bis 30 μm Trockenfilmstärke aufweisende Effekt-Lackschicht, enthaltend o,5 bis 8 Gew.-%, bezogen auf den Lack, mit Titandioxid beschichtete Glimmerplättchen als Interferenzpigment, und gegebenenfalls eine 15 bis 30 μm Trockenfilmstärke aufweisende Klarlackschicht aufgebracht wird, wobei die Gesamttrockenfilmstärke der Effektlackschicht und Klarlackschicht 25 bis 60 μm beträgt, und zumindest die Effektlackschicht durch ein elektrostatisches Auftragsverfahren aufgebracht wird.

EP 0 048 498 A1

Verfahren zum Aufbringen einer mehrschichtigen
Lackierung auf ein Kraftfahrzeug.

Die vorliegende Erfindung betrifft ein Verfahren zum
Aufbringen einer mehrschichtigen Lackierung auf ein
Kraftfahrzeug, wobei eine oder mehrere dieser Schichten
eine Effekt-Lackschicht sind.

Es ist bekannt, Kraftfahrzeuge mit einer mehrschichtigen
Lackierung auf einer oder mehreren Korrosionsschutzschichten insbesondere dann zu versehen, wenn die Lackierung einen sogenannten Metalleffekt aufweisen soll.
Unter Korrosionsschutzschichten im Sinne der vorliegenden
Erfindung werden alle Schutzschichten bzw. Lackschichten
verstanden, die auf die Metallteile vor dem Aufbringen
der Endlackierung aufgebracht werden. Dazu gehören auch
die in der Regel vor der Endlackierung aufgetragenen
Füllerschichten. Wenn eine Endlackierung mit Metalleffekt
durchgeführt wird, umfaßt diese in der Regel eine zweischichtige Lackierung. Die untere Schicht enthält zur
Erzeugung des sogenannten Metalleffektes Metallplättchen,
im allgemeinen Aluminiumplättchen. Wenn nicht nur der
Silber-Metalliceffekt der Aluminiumplättchen gewünscht
wird, sondern eine farbige Metallic-Lackierung, enthält
diese Schicht zusätzlich entsprechende Farbpigmente. Auf
diese die Metallplättchen enthaltende Lackschicht wird
dann ein Klarlack aufgebracht.

Der vorliegenden Erfindung liegt die Aufgabenstellung
zugrunde, Kraftfahrzeuge mit einer Effekt-Lackierung zu
schaffen, die einen stärker changierenden Effekt bzw.

EPA- u. PCT-SATZSPIEGEL-PAPIER
HERMANN ARZT GMBH, MÜNCHEN, TEL. (089) 448 04 31

unterschiedlichere Effekte bei verschiedenen Blickwinkeln aufweist als die bekannte Metallic-Lackierung. Es
wurde überraschenderweise gefunden, daß diese Aufgabenstellung dadurch gelöst wird, daß eine bestimmte Effekt-
Lackschicht durch ein elektrostatisches Auftragsverfahren
aufgebracht wird.

Gegenstand der vorliegenden Erfindung ist demgemäß ein
Verfahren zum Aufbringen einer mehrschichtigen Lackierung
auf ein Kraftfahrzeug, wobei eine oder mehrere dieser
Schichten Korrosionsschutzschichten und eine dieser
Schichten eine Effektlackschicht sind, das dadurch gekennzeichnet ist, daß auf eine Farblackschicht eine 8
bis 3o µm Trockenfilmstärke aufweisende Effekt-Lackschicht, enthaltend o,5 bis 8 Gew.-%, bezogen auf den
Lack, mit Titandioxid beschichtete Glimmerplättchen als
Interferenzpigment, und gegebenenfalls eine 15 bis 3o µm
Trockenfilmstärke aufweisende Klarlackschicht aufgebracht
wird, wobei die Gesamttrockenfilmstärke der Effektlackschicht und Klarlackschicht 25 bis 6o µm beträgt, und
zumindest die Effektlackschicht durch ein elektrostatisches Auftragsverfahren aufgebracht wird.

Das wesentliche Merkmal der Effektlackschicht liegt
darin, daß diese mit Titandioxid beschichtetes Glimmerpulver, d.h. feine Glimmerplättchen enthält, wobei die
Beschichtung mit Titandioxid eine solche Stärke aufweist,
daß eine Interferenz in einer bestimmten gewünschten
Wellenlänge oder einem gewünschten Wellenlängenbereich
erzeugt wird. Derartige Interferenzpigmente sind bekannt.

Die Verwendung dieser Pigmente für Kraftfahrzeuglackierungen hat zudem den Vorteil, daß sie Infrarot-Strahlung
in starkem Maße reflektieren, so daß die Aufheizung des
Innenraums des Kraftfahrzeugs vermindert wird.

0048498

Überraschenderweise lassen sich einwandfreie und zufriedenstellende Effektlackierungen auf Kraftfahrzeugen unter Verwendung von Effektlackschichten mit diesen Pigmenten nur dann erzielen, wenn die Effektlackschicht durch ein elektrostatisches Auftragsverfahren aufgebracht wird. Dies ist besonders deshalb überraschend, weil Metallic-Lacke sich nicht oder nur unbefriedigend elektrostatisch auftragen lassen. Es hat deshalb nicht nahegelegen, an Stelle der Metallic-Lackschicht die Effektlackschicht gemäß der vorliegenden Erfindung durch ein elektrostatisches Auftragsverfahren aufzubringen.

Es können die an sich bekannten elektrostatischen Auftragsverfahren angewandt werden. Beispielsweise kann in einer stationären Anlage der Lack über eine rotierende Glocke oder Scheibe in einem elektrostatischen Feld, sogenannten Randsburg (eingetragenes Warenzeichen)-Anlagen versprüht werden. Es kann auch mit bekannten elektrostatischen Handspritzpistolen gespritzt werden.

Bevorzugt weist die Lackierung eine Effektlackschicht und eine Klarlackschicht auf. Die Effektlackschicht hat vorzugsweise eine Stärke von 1o bis 3o μm, und die Klarlackschicht vorzugsweise von etwa 2o μm, wobei die Gesamtstärke von Effektlackschicht und Klarlackschicht vorzugsweise 3o bis 5o μm beträgt.

Der Anteil an mit Titandioxid beschichteten Glimmerplättchen in der Effektlackschicht beträgt vorzugsweise 1 bis 6 Gew.-%.

Für die Effektlackschicht wird bevorzugt ein in 1 bis 15 Minuten, vorzugsweise 2 bis 12 Minuten, besonders bevorzugt 5 bis 1o Minuten physikalisch trocknender Lack verwendet. Er enthält als Bindemittel vorzugsweise ölfreie Polyester, gegebenenfalls im Gemisch mit Melaminharzen, wie sie bei einer Serienlackierung der Kraftfahrzeuge in der Automobilfabrik und auch bei der Automobillackierung in Reparaturwerkstätten an sich üblich sind, insbesondere für die sogenannten Metalli -Basislacke. Dieser Lack enthält zweckmäßig 15 bis 2o Gew.-%, vorzugsweise etwa 18 Gew.-%, bezogen auf das Bindemittel dieser Schicht, Celluloseäther und/oder -ester bzw. -halbester. Diese Verbindungen sind als Bestandteile von Metalliclackschichten an sich bekannt. Besonders bevorzugt ist, wie nach dem Stand der Technik, Celluloseacetobutyrat. Für den Klarlack werden bei der Serienlackierung als Bindemittel bevorzugt hitzehärtbare Acryl-Melaminharzkombinationen eingesetzt, wie sie ebenfalls an sich auf dem Gebiet der Automobillackierung bekannt sind.

Das Verfahren gemäß der Erfindung kann in vorteilhafter Weise auch zur Lackierung von Kraftfahrzeugen durchgeführt werden, die nur eine farbige Lackierung ohne irgendwelche Effektlacke aufweisen. In diesem Fall kann die vorhandene farbige Lackierung, z.B. bei erforderlichen Reparaturen, nach Anschleifen mit einer Effektlackschicht und einer Klarlackschicht gemäß der Erfindung lackiert werden. Die oben erwähnte zunächst aufgebrachte Farblackschicht wird dabei also durch die vorhandene Lackierung gebildet. Bei der Serienlackierung müßte sie zunächst aufgebracht werden. Da bei einer Reparaturlackierung bzw. einer nachträglichen Lackierung eines eine einfache Farblackierung aufweisenden Kraftfahrzeuges hohe Einbrenntemperaturen nicht mehr angewandt werden können, wie dies bei der Serienfabrikation möglich ist, werden in diesem Fall als Bindemittel für den Klarlack zweckmäßig lufttrocknende Acryl-Isocyanatharzkombinationen verwendet. Auch hierbei handelt es sich um bekannte Bindemittel, wie sie für die Reparaturlackierung von Kraftfahrzeugen verwendet werden.

5

Nach einer bevorzugten Ausführungsform wird die Effekt-lackschicht nicht ausgehärtet, bevor die Klarlackschicht aufgebracht wird. Vielmehr ist es bevorzugt, auf die Effektlackschicht nach 1 bis 15 Minuten, vorzugsweise 2 bis 12 Minuten, besonders bevorzugt 5 bis 1o Minuten, die Klarlackschicht aufzubringen und beide Schichten gemeinsam auszuhärten. Die Effektlackschicht muß dabei, wie oben dargelegt, innerhalb der genannten Zeit soweit physikalisch angetrocknet sein, daß ein Durchmischen oder stärkeres Anquellen der Effektlackschicht beim Auftrag des Klarlackes vermieden wird. Die oben genannten Trocknungszeiten für den Effektlack haben außerdem die Wirkung, daß sehr schnell eine Verfestigung des Bindemittels eintritt, und daß deshalb die mit Titandioxid beschichteten Glimmerplättchen sich nicht mehr in der Schicht bewegen können. Kurz nach dem Auftrag der Effektlackschicht nehmen die Glimmerplättchen überwiegend eine Anordnung etwa parallel zum Untergrund an. Diese Anordnung führt zu dem besonderen Effekt.Wenn sich aber die Glimmerplättchen längere Zeit in der aufgetragenen Schicht bewegen, insbesondere drehen können, besteht die Gefahr, daß sie zu einem erheblichen Anteil eine andere Orientierung einnehmen, wodurch der Effekt vermindert oder vermieden würde.

Überraschenderweise wird der Interferenzeffekt besonders ausgeprägt und stark dann erhalten, wenn die Schichten, insbesondere die Effektlackschicht, die oben angegebenen Stärken aufweisen.

Bei der oben erwähnten zunächst aufgebrachten Farblackschicht kann es sich beim Verfahren gemäß der Erfindung um die in der Kraftfahrzeuglackierung üblicherweise eingesetzten Füllerschichten handeln, die mit einem Pigment in gewünschter Weise gefärbt werden. Wenn eine weiße Schicht gewünscht wird, werden weiße Pigmente eingesetzt.

Gemäß der Erfindung besonders bewährt hat sich ein Glimmer mit Titandioxidbeschichtung, wobei letzere in Rutil-Form vorliegt, und zwar besonders wegen der vorzüglichen Witterungsbeständigkeit.

Die gemäß der Erfindung verwendeten Lacke enthalten naturgemäß die üblichen lacktechnischen Zusatzstoffe und Lösungsmittel.

Beispiel 1

Bei der Serienlackierung wird auf die in üblicher Weise mit Korrosionsschutzschichten versehenen Karosserieteile eine Farblackschicht (farbgebender Füller) in einer Trockenfilmstärke von 4o µm aufgebracht. (Diese Farblackschicht kann auch entfallen, wenn man eine entsprechend gefärbte Korrosionsschutzschicht verwendet.) Das Bindemittel ist auf Basis Alkyd-Melaminharzkombinationen aufgebaut, und es wird 2o Minuten bei 15o bis 175°C eingebrannt. (Es kann auch ein Bindemittel auf Basis Acryl-Melamin- oder Acryl-Isocyanat-Kombinationen eingesetzt werden.)

Hierauf wird in einer stationären Anlage zum elektrostatischen Lackieren unter Verwendung einer rotierenden Glocke im elektrostatischen Feld eine Effektlackschicht in einer Trockenfilmstärke von 2o µm aufgebracht, die einen ölfreien Polyester als Bindemittel enthält, einen Gehalt von etwa 17 Gew.-% Celluloseacetubutyrat, bezogen auf den Bindemittelgehalt dieser Schicht, aufweist und 6 Gew.-% mit Titandioxid in Rutil-Form beschichtete Glimmerplättchen, bezogen auf den Lack, und übliche Lackzusätze und Lösungsmittel enthält. Möglichst schnell danach, in der Praxis nach etwa 5 Minuten, wird hierauf die Klarlackschicht aufgebracht, die eine in der Kraftfahrzeuglackierung übliche Acryl-Melaminharzkombination in einem üblichen Lösungsmittelgemisch enthält. Die

0048498

Trockenfilmstärke dieser Schicht beträgt etwa 2o µm. Danach wird 2o Minuten bei etwa 14o°C eingebrannt.

**Beispiel 2**

Ein Kraftfahrzeug mit einer üblichen Farblackierung wird angeschliffen. Darauf wird mittels einer elektrostatischen Handspritzpistole der Effektlack in einer Trockenfilmstärke von 2o µm aufgebracht. Er enthält als Bindemittel einen ölfreien Polyester, Melaminharz und 19 Gew.-% Celluloseacetubutyrat, bezogen auf das Bindemittel, und 4 Gew.-%, bezogen auf den Lack, des im Beispiel 1 beschriebenen Interferenzpigments. Nach 8 Minuten wird mit einem Klarlack, enthaltend eine Acryl-Isocyanatharzkombination als Bindemittel in einer Trockenfilmstärke von 2o um beschichtet. Danach wird 1o Minuten auf 8o°C oder 1 Stunde lang auf 5o°C erwärmt.

Die so lackierten Kraftfahrzeuge haben einen eindrucksvollen changierenden Effekt. Bei im wesentlichen senkrechter Blickrichtung entspricht der Farbton im wesentlichen dem Farbton des verwendeten Interferenzpigments. Bei Veränderung des Blickwinkels tritt die Untergrundfarbe stärker in Erscheinung.

EPA- u. PCT-SATZSPIEGEL-PAPIER
HERMANN ARZT GMBH, MÜNCHEN, TEL. (089) 4480431

Patentansprüche:

1. Verfahren zum Aufbringen einer mehrschichtigen Lackierung auf ein Kraftfahrzeug, wobei eine oder mehrere dieser Schichten Korrosionsschutzschichten und eine dieser Schichten eine Effektlackschicht sind, d a d u r c h   g e k e n n z e i c h n e t, daß auf eine Farblackschicht eine 8 bis 3o µm Trockenfilmstärke aufweisende Effekt-Lackschicht, enthaltend o,5 bis 8 Gew.-%, bezogen auf den Lack, mit Titandioxid beschichtete Glimmerplättchen als Interferenzpigment, und gegebenenfalls eine 15 bis 3o µm Trockenfilmstärke aufweisende Klarlackschicht aufgebracht wird, wobei die Gesamttrockenfilmstärke der Effektlackschicht und Klarlackschicht 25 bis 6o µm beträgt, und zumindest die Effektlackschicht durch ein elektrostatisches Auftragsverfahren aufgebracht wird.

2. Verfahren nach Anspruch 1, dadurch gekennzeichnet, daß die Trockenfilmstärken der Effekt-Lackschicht 1o bis 3o µm, der Klarlackschicht etwa 2o µm, und der Effekt-Lackschicht und Klarlackschicht zusammen etwa 3o bis 5o µm betragen.

3. Verfahren nach Anspruch 1 oder 2, dadurch gekennzeichnet, daß die Effekt-Lackschicht 1 bis 6 Gew.-% Interferenzglanzpigment, bezogen auf das Gewicht des Bindemittels dieser Schicht, enthält.

4. Verfahren nach einem oder mehreren der Ansprüche 1 bis 3, dadurch gekennzeichnet, daß für die Effekt-Lackschicht ein in 1 bis 15 Minuten, vorzugsweise 2 bis 12 Minuten, besonders bevorzugt 5 bis 1o Minuten, physikalisch trocknender Lack verwendet wird.

5. Verfahren nach Anspruch 4, dadurch gekennzeichnet, daß die Effekt-Lackschicht als Bindemittel ölfreie Polyester, gegebenenfalls im Gemisch mit Melaminharzen, und 15 bis 20 Gew.-%, vorzugsweise etwa 18 Gew.-%, bezogen auf das Bindemittel dieser Schicht, an Celluloseäthern und/oder -estern bzw. -halbestern enthält.

6. Verfahren nach Anspruch 5, dadurch gekennzeichnet, daß der Klarlack als Bindemittel hitzehärtbare Acryl-Melaminharzkombination enthält.

7. Verfahren nach Anspruch 5, dadurch gekennzeichnet, daß der Klarlack als Bindemittel lufttrocknende Acryl-Isocyanatharzkombinationen enthält.

8. Verfahren nach einem oder mehreren der Ansprüche 1 bis 7, dadurch gekennzeichnet, daß auf die Effekt-Lackschicht nach 1 bis 15 Minuten, vorzugsweise nach 2 bis 12 Minuten, besonders bevorzugt nach 5 bis 10 Minuten, die Klarlackschicht aufgebracht und beide Schichten gemeinsam ausgehärtet werden.

Europäisches Patentamt

**EUROPÄISCHER RECHERCHENBERICHT**

## EINSCHLÄGIGE DOKUMENTE

| Kategorie | Kennzeichnung des Dokuments mit Angabe. soweit erforderlich. der maßgeblichen Teile | betrifft Anspruch |
|---|---|---|
| | FR - A - 2 414 068 (MITSUI MINING & SMELTING)<br><br>* Seite 2, Zeile 38 - Seite 3, Zeile 13; Seite 9, Zeilen 9-35; Beispiel 7 *<br><br>& DE - A - 2 900 530<br><br>-- | 1,3,6 |
| | CHEMICAL ABSTRACTS, Band 84, Nr. 2, 1976, Seite 95, Nr. 6597f Columbus, Ohio, U.S.A.<br><br>& JP - A - 75 89435 (KANSAI PAINT CO., LTD.) 17-07-1975<br><br>* Zusammenfassung *<br><br>-- | 1 |
| | FR - A - 2 410 028 (KANSAI PAINT)<br><br>* Seite 6, Zeilen 20-30; Seite 5, Zeile 26 - Seite 6, Zeile 33 *<br><br>& DE - A - 2 851 003<br><br>-- | 1,6 |
| | US - A - 4 180 609 (E. VASSILIOU)<br><br>* Spalte 4, Zeilen 14-68 *<br><br>& DE - A - 2 631 036<br><br>---- | 1 |

### KLASSIFIKATION DER ANMELDUNG (Int. Cl.³)

B 05 D 5/06
B 05 D 7/16
C 09 D 1/28

### RECHERCHIERTE SACHGEBIETE (Int. Cl.³)

B 05 D 5/06
       7/16
C 09 D 5/28
B 05 D 1/04

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie. übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 03-12-1981 | FRIDEN |

EPA form 1503.1   06.78